(19) Europäisches Patentamt
European Patent Office
Office européen des brevets

(11) Publication number : **0 365 959 B1**

(12) # EUROPEAN PATENT SPECIFICATION

(45) Date of publication of patent specification : **31.08.94 Bulletin 94/35**

(51) Int. Cl.$^5$ : **G01P 11/00**

(21) Application number : **89119146.2**

(22) Date of filing : **14.10.89**

(54) **Method and system for approximating rotational speed.**

(30) Priority : **24.10.88 US 261448**

(43) Date of publication of application : **02.05.90 Bulletin 90/18**

(45) Publication of the grant of the patent : **31.08.94 Bulletin 94/35**

(84) Designated Contracting States : **DE FR GB IT SE**

(56) References cited :
**US-A- 3 182 503**
**PATENT ABSTRACTS OF JAPAN, vol. 9, no. 174 (P-374)[1897], 19th July 1985; & JP-A-60 47 964**

(73) Proprietor : **EATON CORPORATION**
**Eaton Center**
**Cleveland, Ohio 44114 (US)**

(72) Inventor : **Gold, Gary Lee**
**1169 West W. Avenue**
**Schoolcraft Michigan 49087 (US)**

(74) Representative : **Rüger, Rudolf, Dr.-Ing. et al**
**Patentanwälte**
**Dr.-Ing. R. Rüger**
**Dipl.-Ing. H.P. Barthelt**
**Webergasse 3**
**D-73728 Esslingen (DE)**

EP 0 365 959 B1

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

### INTRODUCTION

This invention relates generally to a method and system for determining rotational speed of a rotating member such as a vehicular transmission input shaft and more particularly to a method and system for determining approximate rotational speed of a rotating member whose rotation is changing with time.

US-A-3 182 503 disclose a circuitry to obtain the mean rotational speed of an anemometer. To this end the shaft of the anemometer is coupled to a device that transforms the rotation into a current being proportional to the speed. This current signal is supplied into a low pass filter in the form of an integrator. The integrator comprises a differential amplifier which is fed back to its inverted input via a parallel arrangement including a capacitor, a fixed resistor and an adjustable resistor.

The time constant of this low pass filter or what is equivalent its cut off frequency depends on the value of the capacitor and the resistance of both resistors. Therefore, it is necessary to adjust the resistance for calibrating the arrangement. If the adjustment is not stable then the cut off frequency will change and as a consequence the time period which is taken into account to obtain the mean value changes also.

Furthermore, this arrangement is unduly complicated if a microprocessor is used by other reasons since the mean value can be calculated by this CPU.

Other examples where it is necessary to know the mean rotational speed are vehicles wherein the rotational speed, e.g. of the input shaft of the transmission is used as criteria to determine the gear shift points of an automatic or semi-automatic transmission.

### BACKGROUND OF THE INVENTION

Automatic and semi-automatic transmissions utilizing microprocesser controllers for processing speed output signals in accordance with predetermined logic rules to issue output command signals to system activators are known in the art of which examples are disclosed in United States Patents 4,361,060; 4,595,986 and 4,648,290.

Rotational speed of a rotating member however is frequently not constant and may vary with time for a variety of reasons. Such variations in rotational speed (often characterized as "loping" or "oscillations") present a real problem in determining a means or approximate speed for visual and more particularly for control purposes.

Variations in speed relative time results in the problem of having to determine an approximate or mean rotational speed from a plurality of discrete rotational speed values within a predetermined time period.

Although a simple arithmetic mean solution may be suitable for some purposes, a well known more accurate method for determining a mean or approximate value from an array of scattered data is the "method of least squares" which determines an estimated value of the instant value being examined according to the equation:

$$Y = \frac{\sum_{i=1}^{N}(x_i-\bar{x})(y_i-\bar{Y})}{\sum_{i=1}^{N}(x_i-\bar{x})^2}(x-\bar{x})+\bar{Y}$$

where:

$$\bar{X} = \frac{\sum_{i=1}^{N} x_i}{N}$$

$$\bar{Y} = \frac{\sum_{i=1}^{N} y_i}{N}$$

The problem with this method however is that it involves complex calculations that are slow and time consuming.

In many applications, a rapid and accurate approximation of a mean value must be made which is particularly true on providing approximated mean rotational speed values of a rotating shaft for controlling optimum shifting points for vehicular transmission speed change gears.

In contrast to the above, the present invention establishes conditions by which the above equation is reduced to a family relatively simple linear equations for determining approximate rotational speed of a rotating member whose rotational speed may not be uniform and which can be rapidly determined by microprocessors well known to those skilled in the art.

## BRIEF DESCRIPTION OF THE DRAWINGS

FIGURE 1 is a graph of five rotational speed measurements respectively decreasing from left to right over a predetermined time period T;

FIGURE 2 is a graph of five rotational speed measurements respectively increasing from right to left over a predetermined time period T; and

FIGURE 3 is a block diagram of an embodiment of the system of the invention.

## DESCRIPTION OF SOME PREFERRED EMBODIMENTS

It is known from equation (3) on page 363 of "Computer Science; A First Course," John Wiley & Sons Inc., that:

$$y = \bar{y} + M(x - \bar{x})$$
$$= \bar{y} + Mx - M\bar{x}$$

which is the equation of a line with Slope M passing through point $(\bar{x}, \bar{y})$ where $\bar{x}$ and $\bar{y}$ are respective mean values and x and y are actual values.

It is further known from equation (4) on page 365 of the above-described reference that:

$$M = \frac{\sum_{i=1}^{N} (x_i - \bar{x})(y_i - \bar{y})}{\sum_{i=1}^{N} (x_i - \bar{x})^2}$$

which is the slope of a line passing through $(\bar{x}, \bar{y})$ for N number of values of x and y.

Locating the origin of orthogonal axis (x, y) at ($\bar{x}$ = o) and substituting M of equation (4) into equation (3) results in:

$$y_{mean} = \frac{\sum_{i=1}^{N} x_i y_i}{\sum_{i=1}^{N} x_i^2}(x) + \frac{\sum_{i=1}^{N} y_i}{N}$$

Where N is the number of values for x and y and $x = \frac{N-1}{2}$ is the number of values on respective sides of ordinate of the orthogonal (x, y) axis resulting in:

$$y_{mean} = \frac{\sum_{i=1}^{N} x_i y_i}{\sum_{i=1}^{N} x_i^2}\left(\frac{N-1}{2}\right) + \frac{\sum_{i=1}^{N} y_i}{N}$$

Letting N equal the number of speed measurements taken within a predetermined time period T and limiting N to odd whole integers greater than 1; and letting $t_n$ = substantially equivalent incremental time periods within time period T such that $t_n = t_o, t_1, t_2 \ldots . t_n$ and $(t_1-t_o) = (t_2-t_1) = (t_3-t_2) \ldots$; and
substituting speed (s) for for (y) and time (t) for (x) results in the basic equation;

$$s_{mean} = \frac{\sum_{i=1}^{N} t_i s_i}{\sum_{i=1}^{N} t_i^2}\left(\frac{N-1}{2}\right) + \frac{\sum_{i=1}^{N} s_i}{N}$$

Where $\frac{N-1}{2}$ is the even number of speed measurements on opposite sides of an orthogonal axis whose origin is located at the middle value for $t_n$ and whose ordinate is speed whose abscissa is time and for which $T_n$ has the value of zero at the origin with values of $T_n$ having opposite signs on opposite sides of the ordinate and the values of $s_n$ positive in all quadrants. This results in the equation:

$$S_{(approx.)} = \frac{\sum_{n=0}^{n=N-1} \left(\frac{1-N}{2} + n\right) s_n}{\sum_{n=0}^{n=N-1} \left(\frac{1-N}{2} + n\right)^2} \left(\frac{N-1}{2}\right) + \frac{\sum_{n=0}^{n=N-1} s_n}{N}$$

Application of the above equation is best illustrated by graphic examples in FIGURES 1 and 2 where, in FIGURE 1, five speed values ($s_o$, $s_1$, $s_2$, $s_3$ and $s_4$) are respectively decreasing from left to right over time period T.

Note that $T_2$ at the origin is assigned the value of zero and that the values for $T_n$ to the left of the ordinate (speed) are negative and to the right of the ordinate (speed) are positive and that the increments of time along the abscissa are substantially equivalent.

Also note that N equals 5 which is an odd whole integer greater than 1 and that $\frac{N-1}{2}$ equals 2 which is an even integer equal to the number of speed measurements taken on opposite sides of the (speed) ordinate.

FIGURE 2 is a graph of speed measurements versus time that are respectively increasing from right to left over time period T.

The following pair of linear equivalents is provided by substituting the speed values $s_n$ and incremental time values $t_n$ into the basic equation with N = 5 and $\frac{N-1}{2}$ = 2 which, for FIGURE 2 results in:

$$S_{(approx.)} = \frac{3s_0 + 2s_1 + s_2 - s_4}{5}$$

and, for FIGURE 1:

$$S_{(approx.)} = \frac{-s_0 + s_2 + 2s_3 + 3s_4}{5}$$

Thus, a pair of simple linear equations are provided for approximating speed (S approx.) over a predetermined time period T.

Similarly, where N = 3 and $\frac{N-1}{2}$ = 1, it is found that the solution pairs are:

$$S_{(approx.)} = \frac{-s_0 + 2s_1 + 5s_2}{6}$$

and

$$S_{(approx.)} = \frac{5s_0 + 2s_1 - s_2}{6}$$

Likewise, it is found when N = 7 and $\frac{N-1}{2}$ = 3, the solution pairs are:

$$S_{(approx.)} = \frac{-5s_0 - 2s_1 + s_2 + 4s_3 + 7s_4 + 10s_5 + 13s_6}{7}$$

and

$$S_{(approx.)} = \frac{13s_0 + 10s_1 + 7s_2 + 4s_3 + s_4 - 2s_5 - 5s_6}{7}$$

The above linear equations enable rapid calculations by a microprocessor which is extremely advantageous for control purposes such as hereinafter described with respect to FIGURE 3.

In FIGURE 3, a system is provided for approximating rotational speed of a rotating shaft 2 such as an input shaft of a vehicular transmission.

The system includes a speed sensor 4 and processor 6. Speed sensor 4 may be any type of sensor able to sense and transmit a signal 5 of rotational speed values ($s_o$, $s_1$, $s_2$, $s_3$.....$s_n$) of shaft 2 within a predetermined time period T which may be in the order of micro-seconds. Hall-Effect magnetic sensors are but one way to measure rotational speed known to those skilled in the art.

Signal 5 is received by processor 6 which is of the type well known to those skilled in the art operable to receive signal 5 and select certain values therefrom and perform the simple linear arithmetic calculations shown in FIGURE 3.

Thus, for example, where speed measurements ($s_o$, $s_1$ and $s_2$) are selected, they are processed according

to the equation:

$$S_{(approx.)} = \frac{-s_0 + 2s_1 + 5s_2}{6}$$

to provide output signal $s_3$ therefrom.

Although processor 6 is shown in FIGURE 3 as being capable of performing six calculations, such as for illustrative purposes for it may process and provide only one or any combination of output signals $s_3$, $s_3'$, $s_5$, $s_5'$, $s_7$ and $s_7'$ which may be utilized as signal for controlling shifting of vehicular transmission being driven by shaft 2.

Although processor 6 is shown in FIGURE 3 as selecting certain speed values, such may be done by speed sensor 4 by selecting and transmitting only those rotational speed values for which processor 6 is adapted to make the particular linear calculations hereinbefore set forth.

## Claims

1. A linear method for determining the approximate mean rotational speed of a rotating member, said method including the steps of:

   (a) determining an equation by selecting a value for the parameter N in

$$S_{(approx.)} = \frac{\sum_{n=0}^{n=N-1} \left(\frac{1-N}{2} + n\right) s_n}{\sum_{n=0}^{n=N-1} \left(\frac{1-N}{2} + n\right)^2} \left(\frac{N-1}{2}\right) + \frac{\sum_{n=0}^{n=N-1} s_n}{N}$$

   where N is an odd whole number greater than one and equals the number of speed measurements taken within a predetermined time period T;

   $s_n$ are the individual speed measurements having positive sign and being taken within a time period T at equidistant times wherein $s_o$ is taken at the beginning of the time period T and $s_{N-1}$ is taken at the end of time period T;

   (b) measuring rotational speed values $s_n$ of the rotating member as defined in step (a) and providing signals indicative thereof; and

   (c) determining $S_{(approx.)}$ by processing the speed signals of step (b) according to the equation selected at step (a).

2. The method of claim 1 including the step of providing a signal corresponding to the value for $S_{(approx.)}$ determined in step (c).

3. The method of claim 1 wherein N = 3 and $\frac{N-1}{2} = 1$ and

$$S_{(approx.)} = \frac{-s_0 + 2s_1 + 5s_2}{6}$$

4. The method of claim 1 wherein N = 3 and $\frac{N-1}{2} = 1$ and

$$S_{(approx.)} = \frac{5s_0 + 2s_1 - s_2}{6}$$

5. The method of claim 1 wherein N = 5 and $\frac{N-1}{2} = 2$ and

$$S_{(approx.)} = \frac{3s_0 + 2s_1 + s_2 - s_4}{5}$$

**6.** The method of claim 1 wherein N = 5 and $\frac{N-1}{2}$ = 2 and

$$S_{(approx.)} = \frac{-s_0 + s_2 + 2s_3 + 3s_4}{5}$$

**7.** The method of claim 1 wherein N = 7 and $\frac{N-1}{2}$ = 3 and

$$S_{(approx.)} = \frac{-5s_0 - 2s_1 + s_2 + 4s_3 + 7s_4 + 10s_5 + 13s_6}{7}$$

**8.** The method of claim 1 wherein N = 7 and $\frac{N-1}{2}$ = 3 and

$$S_{(approx.)} = \frac{13s_0 + 10s_1 + 7s_2 + 4s_3 + s_4 - 2s_5 - 5s_6}{7}$$

**9.** The method of claims 1 wherein the member is a vehicular shaft.

**10.** The method of claim 1 wherein the shaft is a transmission input shaft.

**11.** The method of claims 2 wherein the signal is a control signal utilized by a vehicular transmission.

**12.** A system for determining approximate rotational speed of a rotating member, said system comprising;

speed sensing means, said means operative to measure and provide a signal indicative of the rotational speed of the rotating member,

means for selecting three values $s_o$, $s_1$, $s_2$ of the speed signal at substantially equidistant times within a predetermined time period, and

means for processing the selected speed values to determine the approximate rotational speed $S_{(approx.)}$ according to one of the equations:

$$\frac{s_0 + 2s_1 - 5s_2}{6} = S_{(approx.)}$$

and

$$\frac{5s_0 + 2s_1 - s_2}{6} = S_{(approx.)}$$

**13.** A system for determining approximate rotational speed of a rotating member, said system comprising;

speed sensing means, said means operative to measure and provide a signal indicative of the rotational speed of the rotating member,

means for selecting five values $s_0,s_1,s_2,s_3,s_4$ of the speed signal at substantially equidistant times within a predetermined time period, and means for processing the selected speed values to determine approximate rotational speed $S_{(approx.)}$ according to one of the equations:

$$S_{(approx.)} = \frac{3s_0 + 2s_1 + s_2 - s_4}{5}$$

and

$$S_{(approx.)} = \frac{-s_0 + s_2 + 2s_3 + 3s_4}{5}$$

**14.** A system for determining approximate rotational speed of a rotating member, said system comprising:

speed sensing means, said means operative to measure and provide a signal indicative of the rotational speed of the rotating member,

means for selecting seven values $s_o$, $s_1$, $s_2$, $s_3$, $s_4$, $s_5$, $s_6$ of the speed signal at subtantially equidistant times within a predetermined time period, and

means for processing the selected speed values to determine the approximate rotational speed $S_{(approx.)}$ according to one of the equations:

$$S_{(approx.)} = \frac{-5s_0 - 2s_1 + s_2 + 4s_3 + 7s_4 + 10s_5 + 13s_6}{7}$$

$$S_{(approx.)} = \frac{13s_6 + 10s_1 + 7s_2 + 4s_3 + s_4 - 2s_5 - 5s_6}{7}$$

**15.** The system of claims 12, 13 or 14, including means for providing a signal indicative of $S_{(approx.)}$.

**16.** The system of claims 12, 13 or 14 wherein the member is a vehicular shaft.

**17.** The system of claim 16 wherein the shaft is a transmission input shaft.

**18.** The system of claim 15 wherein the signal is a control signal utilized by a vehicular transmission.

**Patentansprüche**

**1.** Lineares Verfahren zur Bestimmung der ungefähren mittleren Drehzahl eines sich drehenden Gliedes, wobei das Verfahren die folgenden Schritte aufweist:

(a) Festlegung einer Gleichung durch Auswahl eines Wertes für den Parameter N in

$$S_{(approx.)} = \frac{\sum_{n=0}^{n=N-1} \left(\frac{1-N}{2} + n\right) s_n}{\sum_{n=0}^{n=N-1} \left(\frac{1-N}{2} + n\right)^2} \left(\frac{N-1}{2}\right) + \frac{\sum_{n=0}^{n=N-1} s_n}{N}$$

wobei N eine ungerade ganze Zahl ist, die größer als eins ist und die gleich der Anzahl von Drehzahlmessungen ist, die innerhalb einer vorbestimmten Zeitspanne T vorgenommen werden;
und wobei $s_n$ die einzelnen Drehzahlmeßwerte sind, die ein positives Vorzeichen haben und die innerhalb einer Zeitspanne T zu äquidistanten Zeiten vorgenommen worden sind, wobei $s_o$ zu Beginn der Zeitspanne T und $s_{N-1}$ zu dem Ende der Zeitspanne T bestimmt worden sind;
(b) Messen von Drehzahlwerten $s_n$ des sich drehenden Gliedes, wie in Schritt (a) definiert; und Liefern von diese kennzeichnenden Signalen; und
(c) Bestimmen von $S_{(approx.)}$ durch Verarbeitung der Drehzahlsignale aus Schritt (b) gemäß der in Schritt (a) ausgewählten Gleichung.

**2.** Verfahren nach Anspruch 1 mit einem Schritt, bei dem ein Signal geliefert wird, das dem in Schritt (c) bestimmten Wert für $S_{(approx.)}$ entspricht.

**3.** Verfahren nach Anspruch 1, bei dem N = 3 und $\frac{N-1}{2} = 1$ sowie

$$S_{(approx.)} = \frac{-s_0 + 2s_1 + 5s_2}{6}$$

**4.** Verfahren nach Anspruch 1, bei dem N = 3 und $\frac{N-1}{2} = 1$ und

$$S_{(approx.)} = \frac{5s_0 + 2s_1 - s_2}{6}$$

**5.** Verfahren nach Anspruch 1, bei dem N = 5 und $\frac{N-1}{2} = 2$ und

$$S_{(approx.)} = \frac{3s_0 + 2s_1 + s_2 - s_4}{5}$$

**6.** Verfahren nach Anspruch 1, bei dem N = 5 und $\frac{N-1}{2} = 2$ und

$$S_{(approx.)} = \frac{-s_0 + s_2 + 2s_3 + 3s_4}{5}$$

**7.** Verfahren nach Anspruch 1, bei dem N = 7 und $\frac{N-1}{2} = 3$ und

$$S_{(approx.)} = \frac{-5s_0 - 2s_1 + s_2 + 4s_3 + 7s_4 + 10s_5 + 13s_6}{7}$$

**8.** Verfahren nach Anspruch 1, bei dem N = 7 und $\frac{N-1}{2} = 3$ und

$$S_{(approx.)} = \frac{13s_0 + 10s_1 + 7s_2 + 4s_3 + s_4 - 2s_5 - 5s_6}{7}$$

**9.** Verfahren nach Anspruch 1, bei dem das Glied eine Welle eines Fahrzeuges ist.

**10.** Verfahren nach Anspruch 1, bei dem die Welle eine Getriebeeingangswelle ist.

**11.** Verfahren nach Anspruch 2, bei dem das Signal ein von einem Fahrzeuggetriebe verwendetes Steuersignal ist.

**12.** System zur Bestimmung der ungefähren Drehzahl eines sich drehenden Gliedes, wobei das System aufweist;
Drehzahlsensormittel, wobei die Mittel zum Messen sowie dazu dienen, ein die Drehzahl des sich drehenden Gliedes kennzeichnendes Signal zu liefern,
Mittel zum Auswählen dreier Werte $s_o$, $s_1$, $s_2$ des Drehzahlsignales bei im wesentlichen äquidistanten Zeitpunkten innerhalb einer vorbestimmten Zeitspanne, und
Mittel zum Verarbeiten der ausgewählten Drehzahlwerte, um die ungefähre Drehzahl $S_{(approx.)}$ gemäß einer der Gleichungen

$$\frac{s_0 + 2s_1 - 5s_2}{6} = S_{(approx.)}$$

und

$$\frac{5s_0 + 2s_1 - s_2}{6} = S_{(approx.)}$$

zu bestimmen.

**13.** System zur Bestimmung der ungefähren Drehzahl eines sich drehenden Gliedes, wobei das System aufweist;
drehzahlerfassende Mittel, wobei die Mittel zum Messen sowie dazu dienen, ein Signal zu liefern, das für die Drehzahl des sich drehenden Gliedes kennzeichnend ist,
Mittel zum Auswählten von fünf Werten $s_o$, $s_1$, $s_2$, $s_3$, $s_4$ des Drehzahlsignals bei im wesentlichen äquidistant in einer vorbestimmten Zeitspanne liegenden Zeitpunkten und
Mittel zum Verarbeiten der ausgewählten Drehzahlwerte, um die ungefähre Drehzahl $S_{(approx.)}$ gemäß einer der folgenden Gleichungen

$$S_{(approx.)} = \frac{3s_0 + 2s_1 + s_2 - s_4}{5}$$

and

$$S_{(approx.)} = \frac{-s_0 + s_2 + 2s_3 + 3s_4}{5}$$

zu bestimmen.

**14.** System zur Bestimmung der ungefähren Drehzahl eines sich drehenden Gliedes, wobei das System aufweist:
drehzahlerfassende Mittel, wobei die Mittel zum Messen sowie dazu dienen, ein die Drehzahl des sich drehenden Gliedes kennzeichnendes Signal zu liefern,
Mittel zur Auswahl von sieben Werten $s_o$, $s_1$, $s_2$, $s_3$, $s_4$, $s_5$, $s_6$ für das Drehzahlsignal bei im wesentlichen äquidistant innerhalb einer vorbestimmten Zeitspanne liegenden Zeitpunkten und
Mittel zum verarbeiten der ausgewählten Drehzahlwerte, um die ungefähre Drehzahl $S_{(approx.)}$ gemäß einer der folgenden Gleichungen

$$S_{(approx.)} = \frac{-5s_0 - 2s_1 + s_2 + 4s_3 + 7s_4 + 10s_5 + 13s_6}{7}$$

$$S_{(approx.)} = \frac{13s_6 + 10s_1 + 7s_2 + 4s_3 + s_4 - 2s_5 - 5s_6}{7}$$

**15.** System nach den Ansprüchen 12, 13 oder 14 mit Mitteln zum Liefern eines Signales, das für $S_{(approx.)}$ kennzeichnend ist.

**16.** System nach den Ansprüchen 12, 13 oder 14, bei dem das Glied eine Welle des Fahrzeuges ist.

**17.** System nach Anspruch 16, bei dem die Welle eine Getriebeeingangswelle ist.

**18.** System nach Anspruch 15, bei dem das Signal ein Steuersignal ist, das von einem Fahrzeuggetriebe verwendet wird.

## Revendications

**1.** Procédé linéaire de détermination de la vitesse de rotation moyenne approximative d'un organe rotatif, et procédé comprenant les étapes consistant à :

(a) déterminer une équation en sélectionnant une valeur pour un paramètre N conformément à

$$S_{(approx.)} = \frac{\sum_{n=0}^{n=N-1} \left(\frac{1-N}{2} + n\right) s_n}{\sum_{n=0}^{n=N-1} \left(\frac{1-N}{2} + n\right)^2} \left(\frac{N-1}{2}\right) + \frac{\sum_{n=0}^{n=N-1} s_n}{N}$$

N étant un nombre entier impair supérieur à un et étant égal au nombre des mesures de vitesse exécutées au cours d'un intervalle de temps prédéterminé T;

$s_n$ représentant les mesures individuelles de vitesse possédant un signe positif et effectuées pendant un intervalle de temps T à des instants équidistants, $s_0$ étant considéré au début de l'intervalle de temps T et $s_{N-1}$ à la fin de l'intervalle de temps T;

(b) mesurer les valeurs $s_n$ de la vitesse de rotation de l'organe rotatif telles que définies lors de l'étape (a) et délivrer des signaux indicatifs de ces valeurs; et

(c) déterminer $S_{(approx.)}$ par traitement des signaux de vitesse de l'étape (b) conformément à l'équation sélectionnée lors de l'étape (a).

**2.** Procédé suivant la revendication 1, incluant l'étape consistant à délivrer un signal correspondant à la valeur de $S_{(approx.)}$ déterminée lors de l'étape (c).

**3.** Procédé selon la revendication 1, selon lequel N=3 et $\frac{N-1}{2} = 1$ et

$$S_{(approx.)} = \frac{-s_0 + 2s_1 + 5s_2}{6}$$

**4.** Procédé selon la revendication 1, selon lequel N=3 et $\frac{N-1}{2} = 1$ et

$$S_{(approx.)} = \frac{5s_0 + 2s_1 - s_2}{6}$$

**5.** Procédé selon la revendication 1, selon lequel N=5 et $\frac{N-1}{2} = 2$ et

$$S_{(approx.)} = \frac{3s_0 + 2s_1 - s_4}{5}$$

**6.** Procédé selon la revendication 1, selon lequel N=5 et $\frac{N-1}{2} = 2$ et

$$S_{(approx.)} = \frac{-s_0 + s_2 + 2s_3 + 3s_4}{5}$$

**7.** Procédé selon la revendication 1, selon lequel N=7 et $\frac{N-1}{2} = 3$ et

$$S_{(approx.)} = \frac{-5s_0 - 2s_1 + s_2 + 4s_3 + 7s_4 + 10s_5 + 13s_6}{7}$$

**8.** Procédé selon la revendication 1, selon lequel N=7 et $\frac{N-1}{2} = 3$ et

$$S_{(approx.)} = \frac{13s_0 + 10s_1 + 7s_2 + 4s_3 + s_4 - 2s_5 - 5s_6}{7}$$

**9.** Procédé selon la revendication 1, selon lequel l'organe est l'arbre d'un véhicule.

**10.** Procédé selon la revendication 1, selon lequel l'arbre est un arbre d'entrée de transmission.

**11.** Procédé selon la revendication 2, selon lequel le signal est un signal de commande utilisé par une transmission d'un véhicule.

**12.** Système pour déterminer une vitesse de représentation approximative d'un organe rotatif, ledit système comprenant :

des moyens de détection de vitesse, lesdits moyens agissant de manière à mesurer et délivrer un signal indicatif de la vitesse de rotation de l'organe rotatif,

des moyens pour sélectionner trois valeurs ($s_0$ $s_1$, $s_2$) du signal de vitesse a des instants sensiblement équidistants au cours d'un intervalle de temps prédéterminé, et

des moyens pour traiter les valeurs de vitesse sélectionnées pour déterminer la vitesse de rotation approximative $S_{(approx.)}$ conformément à l'une des équations :

$$\frac{s_0 + 2s_1 - 5s_2}{6} = S_{(approx.)}$$

et

$$\frac{5s_0 + 2s_1 - s_2}{6} = S_{(approx.)}$$

**13.** Système pour déterminer la vitesse de rotation approximative d'un organe rotatif, ledit système comprenant :

des moyens de détection de vitesse, lesdits moyens agissant de manière à mesurer et délivrer un signal indicatif de la vitesse de rotation de l'organe rotatif,

des moyens pour sélectionner cinq valeurs ($s_o$, $s_1$, $s_2$, $s_3$, $s_4$) du signal de vitesse à des instants sensiblement équidistants au cours d'un intervalle de temps prédéterminé, et

des moyens pour traiter les valeurs de vitesse sélectionnées pour déterminer une vitesse de rotation approximative $S_{(approx.)}$ conformément a l'une des équations:

$$S_{(approx.)} = \frac{3s_0 + 2s_1 + s_2 - s_4}{5}$$

et

$$S_{(approx.)} = \frac{-s_0 + s_2 + 2s_3 + 3s_4}{5}$$

**14.** Système pour déterminer une vitesse de rotation approximative d'un organe rotatif, ledit système comprenant :

des moyens de détection de vitesse, lesdits moyens agissant de manière à mesurer et délivrer un signal indicatif de la vitesse de rotation de l'organe rotatif,

des moyens pour sélectionner sept valeurs ($s_o$, $s_1$, $s_2$, $s_3$, $s_4$, $s_5$, $s_6$) du signal de vitesse à des instants sensiblement équidistants au cours d'un intervalle de temps prédéterminé, et

des moyens pour traiter les valeurs de vitesse sélectionnées pour déterminer la vitesse de rotation approximative $S_{(approx.)}$ selon l'une des équations :

$$S_{(approx.)} = \frac{-5s_0 - 2s_1 + s_2 + 4s_3 + 7s_4 + 10s_5 + 13s_6}{7}$$

$$S_{(approx.)} = \frac{13s_0 + 10s_1 + 7s_2 + 4s_3 + s_4 - 2s_5 - 5s_6}{7}$$

**15.** Système selon les revendications 12, 13 ou 14 comprenant des moyens pour délivrer un signal indicatif

de $S_{(approx.)}$.

**16.** Système selon les revendications 12, 13 ou 14, dans lequel l'organe est l'arbre d'un véhicule.

**17.** Système selon la revendication 16, dans lequel l'arbre est un arbre d'entrée de transmission.

**18.** Système selon la revendication 15, dans lequel le signal est un signal de commande utilisé par une transmission d'un véhicule.

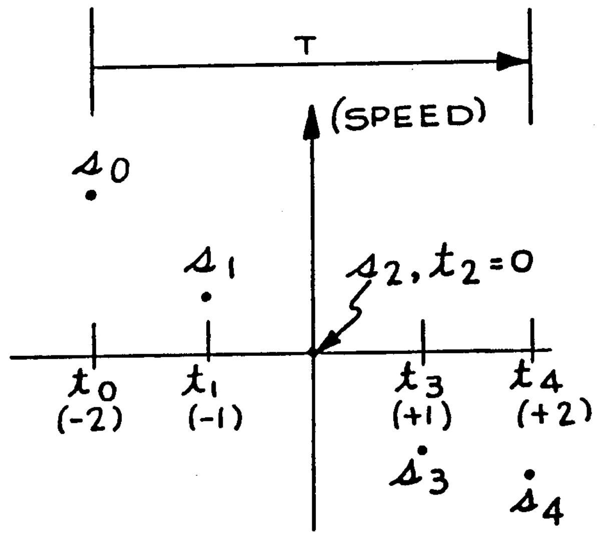
T
(SPEED)
s0
s1
s2, t2=0
t0
(-2)
t1
(-1)
t3
(+1)
t4
(+2)
s3
s4

Fig. 1

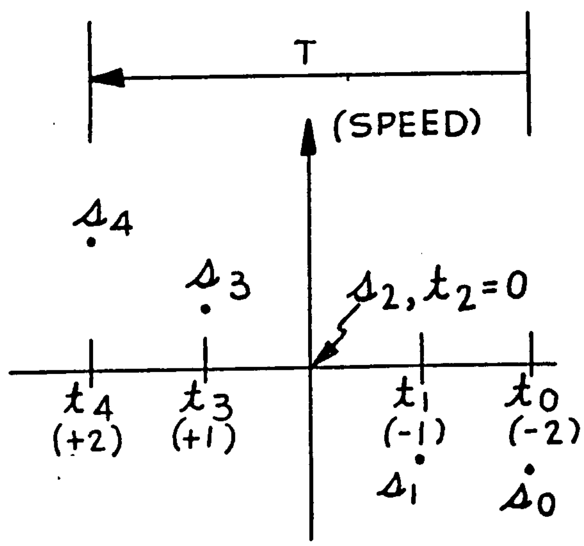
T
(SPEED)
s4
s3
s2, t2=0
t4
(+2)
t3
(+1)
t1
(-1)
t0
(-2)
s1
s0

Fig. 2

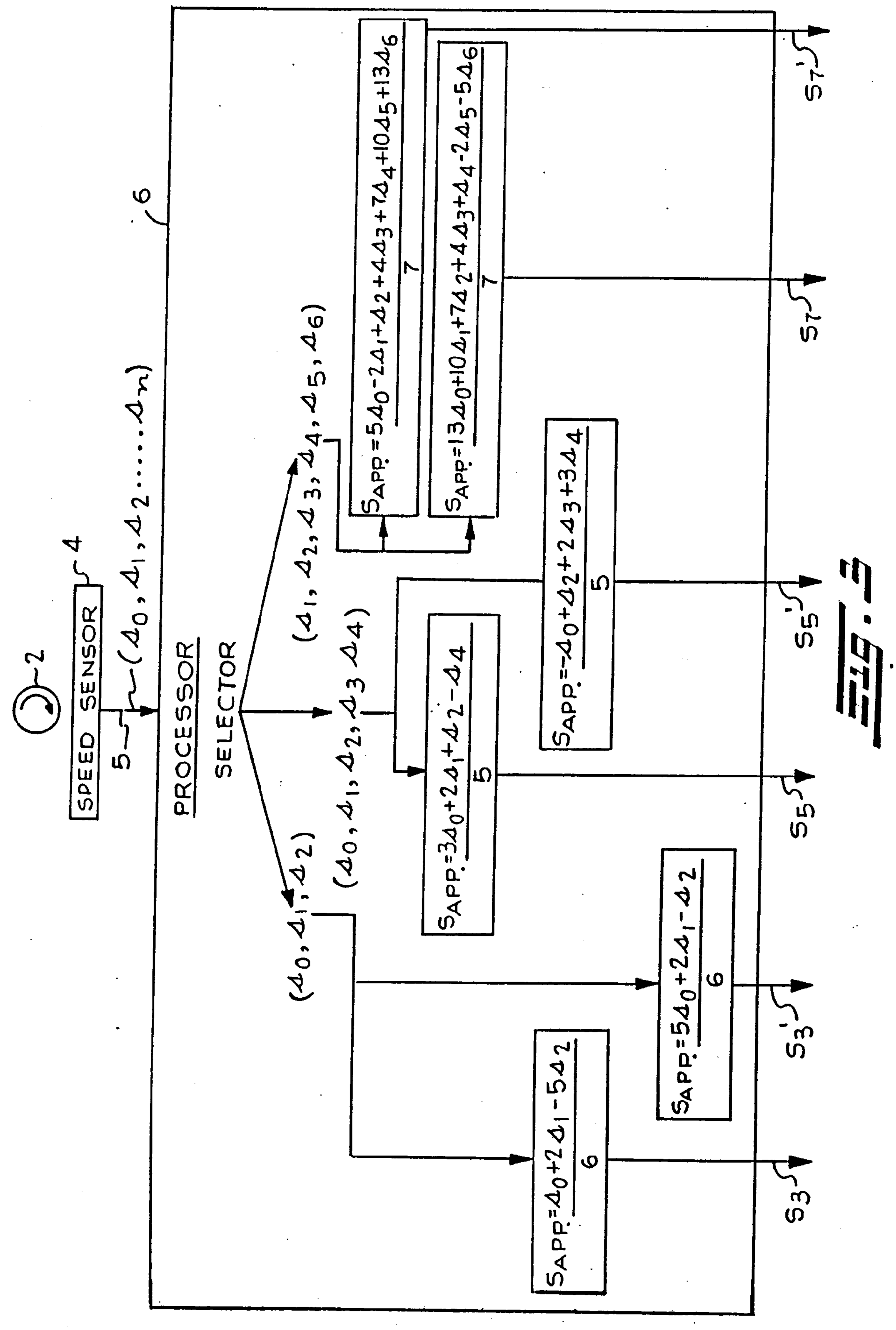
2
SPEED SENSOR
4
5
(s0, s1, s2.....sn)
6
PROCESSOR
SELECTOR
(s0, s1, s2)
(s0, s1, s2, s3 s4)
(s1, s2, s3, s4, s5, s6)
SAPP = (s0 + 2s1 - 5s2) / 6
SAPP = (5s0 + 2s1 - s2) / 6
SAPP = (3s0 + 2s1 + s2 - s4) / 5
SAPP = (-s0 + s2 + 2s3 + 3s4) / 5
SAPP = (5s0 - 2s1 + s2 + 4s3 + 7s4 + 10s5 + 13s6) / 7
SAPP = (13s0 + 10s1 + 7s2 + 4s3 + s4 - 2s5 - 5s6) / 7
S3
S3'
S5
S5'
S7
S7'